# EUROPEAN PATENT SPECIFICATION

(11) **EP 3 597 366 B1**
(45) Date of publication and mention of the grant of the patent: **17.03.2021**
(21) Application number: 18767796.8
(22) Date of filing: 21.03.2018
(51) Int. Cl.: B24B 55/02, B24B 55/04, B24B 9/10, B24D 5/10

(54) **WATER-SAVING COOLING SYSTEM OF GLASS PROCESSING CENTER**
WASSERSPARENDES KÜHLSYSTEM EINES GLASVERARBEITUNGSZENTRUMS
SYSTÈME DE REFROIDISSEMENT À ÉCONOMIE D'EAU DE CENTRE DE TRAITEMENT DE VERRE

(43) Date of publication of application: 22.01.2020
(73) Proprietor: Guilin Champion Union Diamond Co., Ltd., Guilin, Guangxi 541004 (CN)
(72) Inventor: SONG, Jingxin, Guilin Guangxi 541004 (CN); CAI, Yuanpei, Guilin Guangxi 541004 (CN); XIE, Ming, Guilin Guangxi 541004 (CN)
(74) Representative: Sun, Yiming
(86) International application number: PCT/CN2018/079841
(87) International publication number: WO 2018/166540

(56) References cited:
- EP-A1- 0 305 616
- CN-A- 106 272 083
- CN-A- 106 903 567
- CN-U- 204 819 174
- CN-U- 204 819 174
- CN-U- 204 954 634
- CN-U- 205 852 539
- CN-U- 206 732 729
- DE-U1- 20 005 648
- RU-C1- 2 307 729
- US-A- 4 552 122

## Description

### TECHNICAL FIELD

The present invention relates to the technical field of glass machining, and in particular, to a water-saving cooling system of a glass machining center.

### BACKGROUND

In an existing glass machining center, glass is usually fixed on a workbench through a negative sucker, and an arbor of a motor moves along with an instrument to perform machining such as edging, milling and chamfering.

When the glass machining center performs the edging, the processing mainly includes a glass inner processing mode and a glass outer processing mode, and an orientation of a grinding contact section of glass with respect to the arbor is constantly changing. In order to cool the grinding contact section in any orientation during a machining process, a water supply device in an external cooling mode is arranged over the entire circumference of the arbor.

When the glass machining center performs the edging, the arbor moves around the glass fixed through the negative sucker for processing. Due to limitations in this mode, most of external cooling devices only can be arranged above an upper end surface of the glass to cool the grinding contact section. But, it is difficult to arrange the cooling device below a lower end surface of the glass to cool the grinding contact section, which causes a severe limitation of the glass machining center. Therefore, when the glass machining center performs the edging, especially when a special-shaped grinding wheel performs the edging, the cooling of the lower end surface of the glass is seriously affected. Due to insufficient cooling of the lower end surface of the glass, the machining center only can adopt a lower grinding speed in order to ensure machining quality. As a result, the machining efficiency is lower, which is one of the important reasons for higher machining cost of the glass machining center.

When the glass machining center performs the edging, if the external cooling mode is adopted, the cooling water is always in a state of tending to separate from the grinding contact section under the action of centrifugal force. For most concave special-shaped grinding wheels, the greater a difference between a large diameter and a small diameter is, the harder the cooling water is to act on a small diameter portion. For example, if one side of a large diameter portion of the grinding wheel is placed at the upper end of the glass, the external cooling water is shielded from entering the small diameter portion of the grinding wheel by the large diameter portion. If one side of the small diameter portion of the grinding wheel is placed at the upper end of the glass, the glass will shield the external cooling water from entering the large diameter portion. Thus, the grinding wheel with the greater difference in small and large diameters can only machine the glass at a low speed due to the above cooling limitations.

When the glass machining center performs the edging, a grinding contact angle (section) is related to a diameter of the instrument and an engagement amount of the tool, and is usually smaller. For example, when a grinding wheel with a diameter of ϕ100 mm is adopted for machining, the engagement amount of the tool is usually not more than 10 mm, and the grinding contact angle is not more than 45°. Obviously, cooling water actually acting on the grinding contact section at each moment only accounts for a very small amount of the cooling water arranged over the entire circumference, and as in the above example, only accounts for less than 11.5% (45°/360°=11.5%). However, this amount of the cooling water plays a main cooling effect, while the remaining 87.5% of the cooling water is substantially wasted.

An internal cooling grinding wheel of an external cooling grinder (Patent No.: ZL191110012305.7) provides a cooling method in an internal cooling mode. However, in this application, cooling water is also arranged over the entire circumference of a grinding wheel, and thus, is wasted as described above.

A diamond special-shaped grinding wheel and a vertical machining cooling system (Patent Application No.: CN191610159866.9; Patent No.: ZL191619277015.6) provide a new "reverse" cooling method. However, in this application, cooling water and a negative pressure device are also arranged over the entire circumference of a grinding wheel, and thus, the cooling water and a negative pressure gas source also have the same waste problem as described above A cooling system according to the preamble of claim 1 is known from document EP 0305616 A1.

### SUMMARY

An object of the present invention is to provide a water-saving cooling system of a glass machining center, and aims to solve the following technical problems that a cooling effect is poor, adversely affecting high-speed processing; a cooling water or negative pressure gas source utilization rate is low; a demand on processing water is high, power and cost of environmental protection equipment are high, and power requirements and energy consumption of negative pressure gas source manufacturing equipment are high.

The technical solution of the present invention for solving the above technical problems is as described in claim 1.

The present invention has the following beneficial effects. The motor and the transmission device drive the moving plate to rotate to adjust the orientation of the cooling water output from the water outlet passage, so that a α offset advance amount of the grinding area of the grinding wheel relative to the position of the water outlet channel can be adjusted. Under the action of the outer cover, the cooling water concentratedly flows out from the notch of the C-shaped outer cover, so that the water from the water outlet of the grinding wheel mainly concentratedly acts on the grinding area of the grinding wheel to cool the grinding area of the grinding wheel. Thus, cooling efficiency and a cooling water utilization rate are improved, cooling water consumption is effectively reduced, and a treatment capacity requirement on water treatment equipment is greatly reduced. Therefore, higher machining quality, machining speed and machining efficiency can be obtained conveniently.

Based on the above technical solution, the present invention may be further improved as follows.

Further, the transmission device includes a driving gear and a driven gear, the driving gear is arranged below the motor, and the output shaft of the motor is connected to the driving gear; the driven gear is fixedly mounted on an outer circumference of the moving plate in a sleeving manner, and is meshed with the driving gear; and the output shaft of the motor drives the moving plate to rotate through the driving gear and the driven gear.

By adopting the above further improved solution, the beneficial effects lie in that the output shaft of the motor drives the moving plate to rotate through the driving gear and the driven gear, so that transmission efficiency is high, the transmission is stable, and meanwhile, the rotation control precision of the moving plate can be improved, thereby improving the orientation adjustment precision of the cooling water output from the water outlet passage.

Further, the fixing plate is provided with an annular bearing position with a downward opening, and the annular bearing position sleeves a bearing; and an annular end of the moving plate close to the tool holder extends into the annular bearing position, and is rotationally connected to the fixing plate through the bearing.

By adopting the above further improved solution, the beneficial effects lie in that the structure is compact, a space is fully utilized, an overall structural volume is reduced, and meanwhile, the operation of the bearing can be more stable.

Further, a hole retaining ring is arranged at an upper end of the bearing, and is arranged inside an annular bearing position in a sleeving manner, and an outer circumference of the hole retaining ring is embedded in the moving plate; a bearing gland is arranged in an inner ring of the moving plate, is arranged on the periphery of the tool holder in a sleeving manner, and is located at a lower end of the bearing; and the bearing gland is fixedly connected to the fixing plate through a screw.

By adopting the above further improved solution, the beneficial effects lie in that through a combined action of the hole retaining ring and the bearing gland, the bearing can be stabilized, so that the operation of the bearing is stable, and rotation precision of the moving plate relative to the fixing plate is higher.

Further, a tool change ring is arranged at each of an upper end and a lower end of the grinding wheel, and both of the two tool change rings sleeve the tool holder; and the tool change ring at the lower end of the grinding wheel is fixedly connected to the tool holder through a nut.

By adopting the above further improved solution, the beneficial effects lie in that as structures such as the moving plate are arranged on the periphery of the tool holder in a sleeving manner, a tool change fork is blocked from clamping a tool change channel on the tool holder; and the tool change ring is arranged below the grinding wheel, so that the tool change fork can smoothly clamp the tool change ring arranged below the grinding wheel during automatic tool change, realizing automatic change of a tool.

Further, the fixing plate is connected to a first cooling joint, and the first cooling joint is communicated with the annular water channel through a passage arranged in the fixing plate; a lower end cover is arranged at the lower end of the moving plate, and is connected to the moving plate; the upper end of the water outlet passage is communicated with the annular water channel; the lower end of the water outlet passage extends to the grinding wheel; and the cooling water is guided through the first cooling joint, and is output to the annular water channel through the passage arranged in the fixing plate.

By adopting the above further improved solution, the beneficial effects lie in that the cooling water is guided to the first cooling joint, and the upper end of the water outlet passage is communicated with the annular water channel, so that the water outlet passage can be communicated with the annular water channel at any position in 360° rotation. The lower end of the water outlet passage extends to the grinding wheel, so that the cooling water is output to the grinding area of the grinding wheel along the water outlet passage. Thus, directional output of the cooling water is realized, cooling efficiency in a grinding process of the grinding wheel is improved, a cooling water utilization rate is improved, and cooling water consumption is effectively reduced. Therefore, higher machining quality, machining speed and machining efficiency can be obtained conveniently.

Further, sealing rings corresponding to an inner ring and an outer ring of the annular water channel respectively are arranged between the fixing plate and the moving plate.

By adopting the above further improved solution, the beneficial effects lie in that the two sealing rings are used to seal the annular water channel, so that the annular water channel is prevented from water leakage, and stable operation of the water-saving cooling system of the glass machining center is ensured.

Further, an adjusting bolt corresponding to the water outlet passage is arranged on the moving plate, is fixedly connected to the water outlet passage, and is in threaded cooperation with the moving plate; and when being rotated, the adjusting bolt drives the water outlet passage to displace in a radial direction of the tool holder.

By adopting the above further improved solution, the beneficial effect lies in that the adjusting bolt drives the water outlet passage to radially displace to adapt to different sizes of annular water vapor channels on different grinding wheels or different sizes of outer circumferences of the different grinding wheels.

Further, an annular water vapor channel with an upward opening is formed in the grinding wheel, and a plurality of mixed flow passages is arranged in the grinding wheel, and are radially arranged along the grinding wheel to form a ring-shaped structure; and one end of each of the mixed flow passages extends to an annular grinding port of the grinding wheel, and the other end of each of the mixed flow passages is communicated with the annular water vapor channel.

Further, the lower end of the water outlet passage is communicated with the annular water vapor channel formed in the grinding wheel; and the cooling water output from the water outlet passage flows out through the annular water vapor channel and the plurality of mixed flow passages. The cooling water cools the grinding area when passing through the grinding area to form an internal cooling mode.

Further, the lower end of the water outlet passage extends to the outer circumference of the grinding wheel. The cooling water cools the grinding area when passing through the grinding area to form an external cooling mode.

Further, one end of the connecting member is communicated with a negative pressure device; a negative pressure passage is arranged in the fixing plate; one end of the negative pressure passage is communicated with the negative pressure device through the connecting member; the other end of the negative pressure passage is communicated with the annular water vapor channel formed in the grinding wheel through an inner ring of the moving plate; and the negative pressure device generates negative pressure in the negative pressure passage to suck waste chips and water vapor generated by the grinding wheel in a grinding process through the annular water vapor channel and the mixed flow passages. The cooling water cools the grinding area when passing through the grinding area to form a reverse cooling mode.

Further, the connecting member is connected to a second cooling joint; a cooling water passage is arranged in the fixing plate; one end of the cooling water passage is communicated with the second cooling joint through the connecting member; the other end of the cooling water passage is communicated with the annular water vapor channel formed in the grinding wheel through the inner ring of the moving plate; the cooling water is guided to the second cooling joint, and is input into the annular water vapor channel through the cooling water passage; and meanwhile, the negative pressure device and the first cooling joint are shut off.

By adopting the above further improved solution, the beneficial effects lie in that the cooling water is guided to the second cooling joint, and the cooling water output from the cooling water passage flows out through the annular water vapor channel and the plurality of mixed flow passages arranged in the grinding wheel, so that the cooling water is directly thrown to the grinding area of the grinding wheel to form another internal cooling mode for a water supply passage, and the cooling effect is better. In addition, under the same cooling effect, the amount of the required cooling water is usually less as the cooling water flows out through the annular water channel and the multiple mixed flow passages.

Further, a baffle is arranged on each of the two sides of the outer cover close to the grinding area of the grinding wheel; both of the two baffles are connected to the moving plate, and are connected to the outer cover through adjusting nuts; and an opening degree of the outer cover is adjusted by the adjusting nuts.

By adopting the above further improved solution, the beneficial effects lie in that the opening degree of the outer cover is adjusted by the adjusting nuts, so that the diameter change caused by the outer diameter wearing of the grinding wheel can be adapted; and by closing an inefficient passage of the negative pressure gas source, the effectiveness of the negative pressure gas source is improved.

### BRIEF DESCRIPTION OF THE DRAWINGS

FIG. 1 is a schematic structural diagram of a water-saving cooling system of a glass machining center according to a first embodiment of the present invention;
FIG. 2 is a schematic structural diagram of a grinding wheel and a water outlet passage according to the first embodiment of the present invention;
FIG. 3 is a schematic structural diagram of the water-saving cooling system of the glass machining center according to a second embodiment of the present invention;
FIG. 4 is a schematic structural diagram of the grinding wheel and the water outlet passage according to the second embodiment of the present invention;
FIG. 5 is a schematic structural diagram of the water-saving cooling system of the glass machining center according to a third embodiment of the present invention;
FIG. 6 is a schematic structural diagram of the grinding wheel and the water outlet passage according to the third embodiment of the present invention;
FIG. 7 is a first schematic structural diagram of the water-saving cooling system of the glass machining center according to a fourth embodiment of the present invention;
FIG. 8 is a second schematic structural diagram of the water-saving cooling system of the glass machining center according to the fourth embodiment of the present invention;
FIG. 9 is a third schematic structural diagram of the water-saving cooling system of the glass machining center according to the fourth embodiment of the present invention; and
FIG. 10 is a schematically partial enlarged diagram of a fixing plate, a moving plate and the grinding wheel shown in FIG. 9.

In the drawings, the list of components represented by reference numerals is as follows: 1, CNC headstock; 2, tool holder; 3, connecting member; 4, fixing plate; 401, annular bearing position; 402, annular water channel; 5, moving plate; 6, motor; 7, transmission device; 701, driving gear; 702, driven gear; 8, grinding wheel; 801, annular water vapor channel; 802, mixed flow passage; 9, water outlet passage; 10, bearing; 11, hole retaining ring; 12, bearing gland; 13, tool change ring; 14, first cooling joint; 15, lower end cover; 16, sealing ring; 17, adjusting bolt; 18, negative pressure passage; 19, negative pressure device; 20, second cooling joint; 21, cooling water passage; 22, outer cover; 23, bottom cover; 24, baffle; 25, adjusting nut, 26, glass; A, grinding area; and B, water outlet.

### DETAILED DESCRIPTION

The principles and features of the present invention are described below with reference to the accompanying drawings. The embodiments cited are only used to explain the present invention, not to limit the scope of the present invention.

### First Embodiment

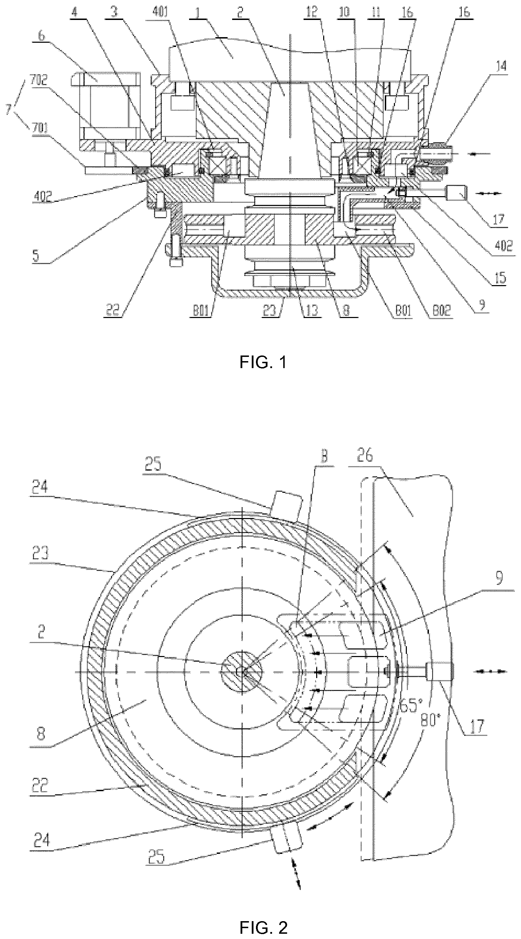

As shown in FIGs. 1 and 2, a water-saving cooling system of a glass machining center includes a CNC headstock 1 and a tool holder 2, wherein the tool holder 2 is located at the lower end of the CNC headstock 1, and the upper end of the tool holder 2 is fixedly connected to an output end of the CNC headstock 1.

A fixing plate 4 is arranged on the periphery of the output end of the CNC headstock 1 in a sleeving manner, and is fixedly connected to a main body of the CNC headstock 1 through a connecting member 3.

A moving plate 5 is arranged on the periphery of the tool holder 2 in a sleeving manner, and is located at a lower end of the fixing plate 4. A motor 6 is arranged on one side of an upper end of the fixing plate 4. An output shaft of the motor 6 is connected to the moving plate 5 through a transmission device 7.

A grinding wheel 8 sleeves the tool holder 2, and is located below the moving plate 5. The output end of the CNC headstock 1 drives the grinding wheel 8 to rotate through the tool holder 2.

An annular water channel 402 is formed on the fixing plate 4. A water outlet passage 9 is arranged in the moving plate 5. An upper end of the water outlet passage 9 is communicated with the annular water channel 402. A lower end of the water outlet passage 9 extends to the grinding wheel 8. Cooling water is guided to the annular water channel 402 through a passage arranged in the fixing plate 4, and is output to the grinding wheel 8 through the water outlet passage 9. The motor 6 drives the moving plate 5 to rotate through the transmission device 7 to regulate an orientation of the cooling water output from the water outlet passage 9.

In the above embodiment, the transmission device 7 includes a driving gear 701 and a driven gear 702. The driving gear 701 is arranged below the motor 6. The output shaft of the motor 6 is connected to the driving gear 701. The driven gear 702 is fixedly mounted on an outer circumference of the moving plate 5 in a sleeving manner, and is meshed with the driving gear 701. The output shaft of the motor 6 drives the moving plate 5 to rotate through the driving gear 701 and the driven gear 702.

In the above embodiment, the fixing plate 4 is provided with an annular bearing position 401 with a downward opening, and the annular bearing position 401 sleeves a bearing 10. An annular end of the moving plate 5 close to the tool holder 2 extends into the annular bearing position 401, and is rotationally connected to the fixing plate 4 through the bearing 10, so that the rotation of the moving plate 5 relative to the fixing plate 4 is more stable.

In the above embodiment, a hole retaining ring 11 is arranged at an upper end of the bearing 10, and is arranged inside an annular bearing position 401 in a sleeving manner. An outer circumference of the hole retaining ring 11 is embedded in the moving plate 5. A bearing gland 12 is arranged in an inner ring of the moving plate 5, is arranged on the periphery of the tool holder 2 in a sleeving manner, and is located at the lower end of the bearing 10. The bearing gland 12 is fixedly connected to the fixing plate 4 through a screw.

In the above embodiment, a tool change ring 13 is arranged at each of an upper end and a lower end of the grinding wheel 8, and both of the two tool change rings 13 sleeve the tool holder 2. The tool change ring 13 at the lower end of the grinding wheel 8 is fixedly connected to the tool holder 2 through a nut.

As structures such as the moving plate 5 are arranged on the periphery of the tool holder 2 in a sleeving manner, a tool change fork is blocked from clamping a tool change channel on the tool holder 2. The tool change ring 13 is arranged below the grinding wheel 8, so that the tool change fork can smoothly clamp the tool change ring 13 arranged below the grinding wheel 8 during automatic tool change, realizing automatic change of a tool.

In the above embodiment, the fixing plate 4 is connected to a first cooling joint 14. The first cooling joint 14 is communicated with the annular water channel 402 through a passage arranged in the fixing plate 4. A lower end cover 15 is arranged at a lower end of the moving plate 5, and is connected to the moving plate 5. The upper end of the water outlet passage 9 is communicated with the annular water channel 402; and the lower end of the water outlet passage 9 extends to the grinding wheel 8. The cooling water is guided through the first cooling joint 14, and is output to the annular water channel 402 through the passage arranged in the fixing plate 4.

The cooling water is guided to the first cooling joint 14, and the upper end of the water outlet passage 9 is communicated with the annular water channel 402, so that the water outlet passage 9 can be communicated with the annular water channel 402 at any position in 360° rotation. The lower end of the water outlet passage 9 extends to the grinding wheel 8 through the lower end cover 15, so that the cooling water is output to the grinding wheel 8 along the water outlet passage 9. Thus, directional output of the cooling water is realized, cooling efficiency in a grinding process of the grinding wheel 8 is improved, a cooling water utilization rate is improved, and cooling water consumption is effectively reduced. Therefore, a higher machining speed is ensured.

In the above embodiment, sealing rings 16 corresponding to an inner ring and an outer ring of the annular water channel 402 respectively are arranged between the fixing plate 4 and the moving plate 5.

The two sealing rings 16 can seal the annular water channel 402, so that the annular water channel 402 is prevented from water leakage, and stable operation of the water-saving cooling system of the glass machining center is ensured.

In the above embodiment, an annular water vapor channel 801 with an upward opening is formed in the grinding wheel 8. A plurality of mixed flow passages 802 is arranged in the grinding wheel 8, and are radially arranged along the grinding wheel 8 to form a ring-shaped structure. One end of each of the mixed flow passages 802 extends to an annular grinding port of the grinding wheel 8, and the other end of each of the mixed flow passages 802 is communicated with the annular water vapor channel 801.

In the above embodiment, an adjusting bolt 17 corresponding to the water outlet passage 9 is arranged on the moving plate 5, is fixedly connected to the water outlet passage 9, and is in threaded cooperation with the moving plate 5. When being rotated, the adjusting bolt 17 drives the water outlet passage 9 to displace in a radial direction.

The adjusting bolt 17 drives the water outlet passage 9 to radially displace to adapt to different sizes of the annular water vapor channels 801 on the different grinding wheels 8.

In the above embodiment, the lower end of the water outlet passage 9 is communicated with the annular water vapor channel 801 formed in the grinding wheel 8; and the cooling water output from the water outlet passage 9 flows out through the annular water vapor channel 801 and the plurality of mixed flow passages 802. The cooling water cools the grinding area A when passing through the grinding area A to realize an internal cooling mode.

The CNC headstock 1 controls the tool holder 2 to rotate, the tool holder 2 drives the grinding wheel 8 to rotate, and the glass is machined by the grinding wheel 8. During the machining, the cooling water is guided to the first cooling joint 14, is guided to the annular water channel 402 through the passage arranged in the fixing plate 4, and is output to the grinding wheel 8 through the water outlet passage 9. When the cooling water flows out from the water outlet passage 9, a hysteretic α offset is generated in the grinding area A of the grinding wheel 8 relative to the position of the water outlet passage 9 due to the high-speed rotation of the grinding wheel 8. An actual value of the α offset is affected by factors such as the rotation speed of the grinding wheel 8 and the diameter of the grinding wheel 8. The motor 6 and the transmission device 7 drives the moving plate 5 to rotate to regulate an orientation of the cooling water output from the water outlet passage 9, and the α offset advance amount of the grinding area A of the grinding wheel 8 relative to the position of the water outlet channel 9 can be adjusted, so that the water from the water outlet B of the grinding wheel 8 mainly concentratedly acts on the grinding area A of the grinding wheel 8 to cool the grinding area A of the grinding wheel 8. Thus, cooling efficiency and a cooling water utilization rate are improved, cooling water consumption is effectively reduced, and a treatment capacity requirement on water treatment equipment is greatly reduced. Therefore, higher machining quality, machining speed and machining efficiency can be obtained conveniently.

The above embodiment can be further improved as follows.

A C-shaped outer cover 22 is arranged at the lower end of the moving plate 5, and is arranged on the periphery of the grinding wheel 8. A bottom cover 23 is arranged at the lower end of the outer cover 22, and is fixedly connected to the outer cover 22. A cover structure formed by the bottom cover 23 and the outer cover 22 covers the grinding wheel 8. A part of a grinding surface of the grinding wheel 8 extends out of a notch of the C-shaped outer cover 22 to form a working area. An area of the grinding wheel 8 in contact with a workpiece forms a grinding area; a water outlet of the water outlet passage 9 is of an arc structure; and the arc length of the water outlet of the water outlet passage 9 is one or two times of the length of the grinding area.

Meanwhile, when flowing out through the annular water vapor channel 801 and the plurality of mixed flow passages 802, the cooling water concentratedly flows out from a working area of the C-shaped outer cover 22 under the action of the outer cover 22, so that the cooling water is concentratedly provided to the grinding area A of the grinding wheel 8 to cool the grinding area A. A grinding wheel 8 with a diameter of 150 mm is taken as an example. Due to the diameter change caused by the working layer wearing of the grinding wheel 8, correspondingly, an opening angle in a notch area of the outer cover 22 is between 65° and 80°. Under the same cooling condition, the amount of the cooling water concentratedly provided to the grinding area A of the grinding wheel8 for cooling is 17%-22.2% of that of the cooling water provided to the circumference of the grinding wheel 8. Thus, the consumption of the cooling water is effectively reduced.

In the above embodiment, a baffle 24 is arranged on each of the two sides of the outer cover 22 close to the grinding area of the grinding wheel 8. Both of the two baffles 24 are connected to the moving plate 5, and are connected to the outer cover 22 through adjusting nuts 25. An opening degree of the outer cover 22 is adjusted through the adjusting nuts 25. By adjusting the opening degree of the outer cover 22, the diameter change of the grinding wheel 8 caused due to wearing can be adapted.

### Second Embodiment

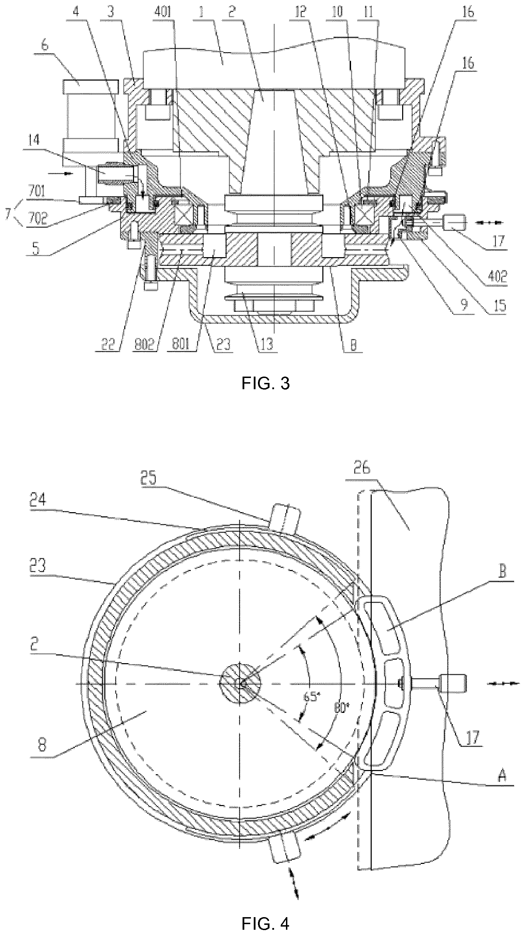

As shown in FIGs. 3 and 4, a water-saving cooling system of a glass machining center includes a CNC headstock 1 and a tool holder 2, wherein the tool holder 2 is located at the lower end of the CNC headstock 1, and the upper end of the tool holder 2 is fixedly connected to an output end of the CNC headstock 1.

A fixing plate 4 is arranged on the periphery of the output end of the CNC headstock 1 in a sleeving manner, and is fixedly connected to a main body of the CNC headstock 1 through a connecting member 3.

A moving plate 5 is arranged on the periphery of the tool holder 2 in a sleeving manner, and is located at the lower end of the fixing plate 4. A motor 6 is arranged on one side of the upper end of the fixing plate 4. An output shaft of the motor 6 is connected to the moving plate 5 through a transmission device 7.

A grinding wheel 8 sleeves the tool holder 2, and is located below the moving plate 5. The output end of the CNC headstock 1 drives the grinding wheel 8 to rotate through the tool holder 2.

An annular water channel 402 is formed on the fixing plate 4. A water outlet passage 9 is arranged in the moving plate 5. An upper end of the water outlet passage 9 is communicated with the annular water channel 402. The lower end of the water outlet passage 9 extends to the grinding wheel 8. Cooling water is guided to the annular water channel 402 through a passage arranged in the fixing plate 4, and is output to the grinding wheel 8 through the water outlet passage 9. The motor 6 drives the moving plate 5 to rotate through the transmission device 7 to regulate an orientation of the cooling water output from the water outlet passage 9.

In the above embodiment, the transmission device 7 includes a driving gear 701 and a driven gear 702. The driving gear 701 is arranged below the motor 6. The output shaft of the motor 6 is connected to the driving gear 701. The driven gear 702 is fixedly mounted on an outer circumference of the moving plate 5 in a sleeving manner, and is meshed with the driving gear 701. The output shaft of the motor 6 drives the moving plate 5 to rotate through the driving gear 701 and the driven gear 702.

In the above embodiment, the fixing plate 4 is provided with an annular bearing position 401 with a downward opening, and the annular bearing position 401 sleeves a bearing 10. An annular end of the moving plate 5 close to the tool holder 2 extends into the annular bearing position 401, and is rotationally connected to the fixing plate 4 through the bearing 10, so that the rotation of the moving plate 5 relative to the fixing plate 4 is more stable.

In the above embodiment, a hole retaining ring 11 is arranged at the upper end of the bearing 10, and is arranged inside an annular bearing position 401 in a sleeving manner. An outer circumference of the hole retaining ring 11 is embedded in the moving plate 5. A bearing gland 12 is arranged in an inner ring of the moving plate 5, is arranged on the periphery of the tool holder 2 in a sleeving manner, and is located at the lower end of the bearing 10. The bearing gland 12 is fixedly connected to the fixing plate 4 through a screw.

In the above embodiment, a tool change ring 13 is arranged at each of the upper end and the lower end of the grinding wheel 8, and both of the two tool change rings 13 sleeve the tool holder 2. The tool change ring 13 at the lower end of the grinding wheel 8 is fixedly connected to the tool holder 2 through a nut.

As structures such as the moving plate 5 are arranged on the periphery of the tool holder 2 in a sleeving manner, a tool change fork is blocked from clamping a tool change channel on the tool holder 2. The tool change ring 13 is arranged below the grinding wheel 8, so that the tool change fork can smoothly clamp the tool change ring 13 arranged below the grinding wheel 8 during automatic tool change, realizing automatic change of a tool.

In the above embodiment, the fixing plate 4 is connected to a first cooling joint 14. The first cooling joint 14 is communicated with the annular water channel 402 through a passage arranged in the fixing plate 4. A lower end cover 15 is arranged at the lower end of the moving plate 5, and is connected to the moving plate 5. The upper end of the water outlet passage 9 is communicated with the annular water channel 402; and the lower end of the water outlet passage 9 extends to the grinding wheel 8. The cooling water is guided through the first cooling joint 14, and is output to the annular water channel 402 through the passage arranged in the fixing plate 4.

The cooling water is guided to the first cooling joint 14, and the upper end of the water outlet passage 9 is communicated with the annular water channel 402, so that the water outlet passage 9 can be communicated with the annular water channel 402 at any position in 360° rotation. The lower end of the water outlet passage 9 extends to the grinding wheel 8 through the lower end cover 15, so that the cooling water is output to the grinding wheel 8 along the water outlet passage 9. Thus, directional output of the cooling water is realized, cooling efficiency in a grinding process of the grinding wheel 8 is improved, a cooling water utilization rate is improved, and cooling water consumption is effectively reduced. Therefore, a higher machining speed is ensured.

In the above embodiment, sealing rings 16 corresponding to an inner ring and an outer ring of the annular water channel 402 respectively are arranged between the fixing plate 4 and the moving plate 5.

The two sealing rings 16 can seal the annular water channel 402, so that the annular water channel 402 is prevented from water leakage, and stable operation of the water-saving cooling system of the glass machining center is ensured.

In the above embodiment, an adjusting bolt 17 corresponding to the water outlet passage 9 is arranged on the moving plate 5, is fixedly connected to the water outlet passage 9, and is in threaded cooperation with the moving plate 5. When being rotated, the adjusting bolt 17 drives the water outlet passage 9 to displace in a radial direction.

The adjusting bolt 17 drives the water outlet passage 9 to radially displace to adapt to different sizes of outer circumferences of the different grinding wheels 8.

In the above embodiment, the lower end of the water outlet passage 9 extends to the outer circumference of the grinding wheel 8. The cooling water cools the grinding area A when passing through the grinding area A to realize an external cooling mode.

The CNC headstock 1 controls the tool holder 2 to rotate, the tool holder 2 drives the grinding wheel 8 to rotate, and the glass is machined by the grinding wheel 8. During the machining, the cooling water is guided to the first cooling joint 14, and is guided to the annular water channel 402 through the passage arranged in the fixing plate 4. When the cooling water flows to the outer circumference of the grinding wheel 8 through the water outlet passage 9, a hysteresis α offset is generated in the grinding area A of the grinding wheel 8 relative to the position of the water outlet passage 9 due to the high-speed rotation of the grinding wheel 8. An actual value of the α offset is affected by factors such as the rotation speed of the grinding wheel 8 and the diameter of the grinding wheel 8. The motor 6 and the transmission device 7 drives the moving plate 5 to rotate to regulate an orientation of the cooling water output from the water outlet passage 9, and the α offset advance amount of the grinding area A of the grinding wheel 8 relative to the position of the water outlet channel 9 can be adjusted, so that the water from the water outlet B of the grinding wheel 8 mainly concentratedly acts on the grinding area A of the grinding wheel 8 to cool the grinding area A of the grinding wheel 8. Thus, cooling efficiency and a cooling water utilization rate are improved, cooling water consumption is effectively reduced, and a treatment capacity requirement on water treatment equipment is greatly reduced. Therefore, higher machining quality, machining speed and machining efficiency can be obtained conven iently.

The above embodiment can be further improved as follows.

A C-shaped outer cover 22 is arranged at the lower end of the moving plate 5, and is arranged on the periphery of the grinding wheel 8. A bottom cover 23 is arranged at the lower end of the outer cover 22, and is fixedly connected to the outer cover 22. A cover structure formed by the bottom cover 23 and the outer cover 22 covers the grinding wheel 8. A part of a grinding surface of the grinding wheel 8 extends out of a notch of the C-shaped outer cover 22 to form a working area. An area of the grinding wheel 8 in contact with a workpiece forms a grinding area; a water outlet of the water outlet passage 9 is of an arc structure; and the arc length of the water outlet of the water outlet passage 9 is one or two times of the length of the grinding area.

Meanwhile, when flowing to the outer circumference of the grinding wheel 8 through the water outlet passage 9, the cooling water concentratedly flows out from a working area of the C-shaped outer cover 22 under the action of the outer cover 22, so that the cooling water is concentratedly provided to the grinding area A of the grinding wheel 8 to cool the grinding area A. A grinding wheel 8 with a diameter of 150 mm is taken as an example. Due to the diameter change caused by the working layer wearing of the grinding wheel 8, correspondingly, an opening angle in a notch area of the outer cover 22 is between 65° and 80°. Under the same cooling condition, the amount of the cooling water concentratedly provided to the grinding area A of the grinding wheel 8 is 17%-22.2% of that of the cooling water provided to the circumference of the grinding wheel 8. Thus, the consumption of the cooling water is effectively reduced.

A baffle 24 is arranged on each of the two sides of the outer cover 22 close to the grinding area of the grinding wheel 8. Both of the two baffles 24 are connected to the moving plate 5, and are connected to the outer cover 22 through adjusting nuts 25. An opening degree of the outer cover 22 is adjusted through the adjusting nuts 25. By adjusting the opening degree of the outer cover 22, the diameter change of the grinding wheel 8 caused due to wearing can be adapted.

### Third Embodiment

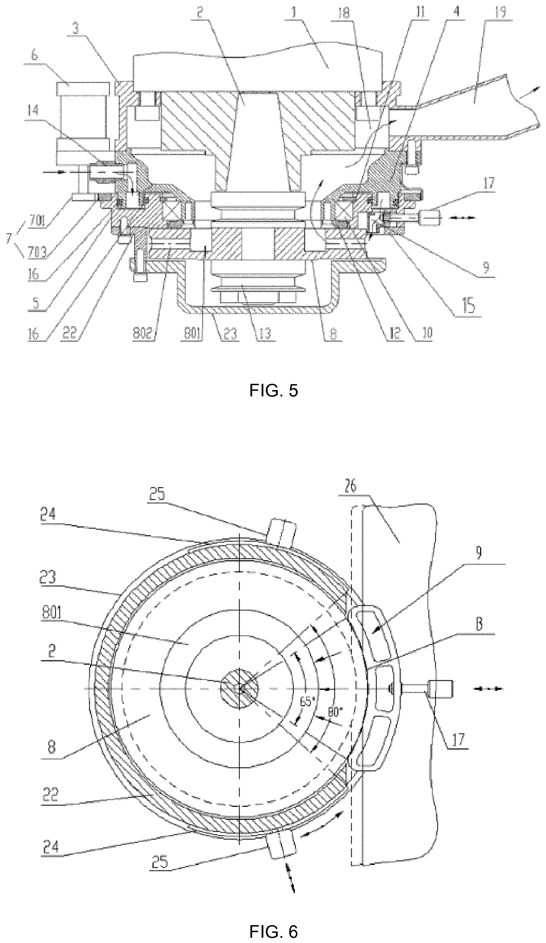

As shown in FIGs. 5 and 6, a water-saving cooling system of a glass machining center includes a CNC headstock 1 and a tool holder 2, wherein the tool holder 2 is located at the lower end of the CNC headstock 1, and the upper end of the tool holder 2 is fixedly connected to an output end of the CNC headstock 1.

A fixing plate 4 is arranged on the periphery of the output end of the CNC headstock 1 in a sleeving manner, and is fixedly connected to a main body of the CNC headstock 1 through a connecting member 3.

A moving plate 5 is arranged on the periphery of the tool holder 2 in a sleeving manner, and is located at the lower end of the fixing plate 4. A motor 6 is arranged on one side of the upper end of the fixing plate 4. An output shaft of the motor 6 is connected to the moving plate 5 through a transmission device 7.

A grinding wheel 8 sleeves the tool holder 2, and is located below the moving plate 5. The output end of the CNC headstock 1 drives the grinding wheel 8 to rotate through the tool holder 2.

An annular water channel 402 is formed on the fixing plate 4. A water outlet passage 9 is arranged in the moving plate 5. An upper end of the water outlet passage 9 is communicated with the annular water channel 402. The lower end of the water outlet passage 9 extends to the grinding wheel 8. Cooling water is guided to the annular water channel 402 through a passage arranged in the fixing plate 4, and is output to the grinding wheel 8 through the water outlet passage 9. The motor 6 drives the moving plate 5 to rotate through the transmission device 7 to regulate an orientation of the cooling water output from the water outlet passage 9.

In the above embodiment, the transmission device 7 includes a driving gear 701 and a driven gear 702. The driving gear 701 is arranged below the motor 6. The output shaft of the motor 6 is connected to the driving gear 701. The driven gear 702 is fixedly mounted on an outer circumference of the moving plate 5 in a sleeving manner, and is meshed with the driving gear 701. The output shaft of the motor 6 drives the moving plate 5 to rotate through the driving gear 701 and the driven gear 702.

In the above embodiment, the fixing plate 4 is provided with an annular bearing position 401 with a downward opening, and the annular bearing position 401 sleeves a bearing 10. An annular end of the moving plate 5 close to the tool holder 2 extends into the annular bearing position 401, and is rotationally connected to the fixing plate 4 through the bearing 10, so that the rotation of the moving plate 5 relative to the fixing plate 4 is more stable.

In the above embodiment, a hole retaining ring 11 is arranged at the upper end of the bearing 10, and is arranged inside an annular bearing position 401 in a sleeving manner. An outer circumference of the hole retaining ring 11 is embedded in the moving plate 5. A bearing gland 12 is arranged in an inner ring of the moving plate 5, is arranged on the periphery of the tool holder 2 in a sleeving manner, and is located at the lower end of the bearing 10. The bearing gland 12 is fixedly connected to the fixing plate 4 through a screw.

In the above embodiment, a tool change ring 13 is arranged at each of the upper end and the lower end of the grinding wheel 8, and both of the two tool change rings 13 sleeve the tool holder 2. The tool change ring 13 at the lower end of the grinding wheel 8 is fixedly connected to the tool holder 2 through a nut.

As structures such as the moving plate 5 are arranged on the periphery of the tool holder 2 in a sleeving manner, a tool change fork is blocked from clamping a tool change channel on the tool holder 2. The tool change ring 13 is arranged below the grinding wheel 8, so that the tool change fork can smoothly clamp the tool change ring 13 arranged below the grinding wheel 8 during automatic tool change, realizing automatic change of a tool.

In the above embodiment, the fixing plate 4 is connected to a first cooling joint 14. The first cooling joint 14 is communicated with the annular water channel 402 through a passage arranged in the fixing plate 4. A lower end cover 15 is arranged at the lower end of the moving plate 5, and is connected to the moving plate 5. The upper end of the water outlet passage 9 is communicated with the annular water channel 402; and the lower end of the water outlet passage 9 extends to the grinding wheel 8. The cooling water is guided through the first cooling joint 14, and is output to the annular water channel 402 through the passage arranged in the fixing plate 4.

The cooling water is guided to the first cooling joint 14, and the upper end of the water outlet passage 9 is communicated with the annular water channel 402, so that the water outlet passage 9 can be communicated with the annular water channel 402 at any position in 360° rotation. The lower end of the water outlet passage 9 extends to the grinding wheel 8 through the lower end cover 15, so that the cooling water is output to the grinding wheel 8 along the water outlet passage 9. Thus, directional output of the cooling water is realized, cooling efficiency in a grinding process of the grinding wheel 8 is improved, a cooling water utilization rate is improved, and cooling water consumption is effectively reduced. Therefore, a higher machining speed is ensured.

In the above embodiment, sealing rings 16 corresponding to an inner ring and an outer ring of the annular water channel 402 respectively are arranged between the fixing plate 4 and the moving plate 5.

The two sealing rings 16 can seal the annular water channel 402, so that the annular water channel 402 is prevented from water leakage, and stable operation of the water-saving cooling system of the glass machining center is ensured.

In the above embodiment, an annular water vapor channel 801 with an upward opening is formed in the grinding wheel 8. A plurality of mixed flow passages 802 is arranged in the grinding wheel 8, and are radially arranged along the grinding wheel 8 to form a ring-shaped structure. One end of each of the mixed flow passages 802 extends to an annular grinding port of the grinding wheel 8, and the other end of each of the mixed flow passages 802 is communicated with the annular water vapor channel 801.

In the above embodiment, an adjusting bolt 17 corresponding to the water outlet passage 9 is arranged on the moving plate 5, is fixedly connected to the water outlet passage 9, and is in threaded cooperation with the moving plate 5. When being rotated, the adjusting bolt 17 drives the water outlet passage 9 to displace in a radial direction.

The adjusting bolt 17 drives the water outlet passage 9 to radially displace to adapt to different sizes of outer circumferences of the different grinding wheels 8.

In the above embodiment, the lower end of the water outlet passage 9 extends to the outer circumference of the grinding wheel 8.

In the above embodiment, one end of the connecting member 3 is communicated with a negative pressure device 19. A negative pressure passage 18 is arranged in the fixing plate 4. One end of the negative pressure passage 18 is communicated with the negative pressure device 19 through the connecting member 3. The other end of the negative pressure passage 18 is communicated with the annular water vapor channel 801 formed in the grinding wheel 8 through an inner ring of the moving plate 5. The negative pressure device 19 generates negative pressure in the negative pressure passage 18 to suck waste chips and water vapor generated by the grinding wheel 8 in a grinding process through the annular water vapor channel 801 and the mixed flow passages 802. The cooling water cools the grinding area A when passing through the grinding area A to realize a reverse cooling mode.

The CNC headstock 1 controls the tool holder 2 to rotate, the tool holder 2 drives the grinding wheel 8 to rotate, and the glass is machined by the grinding wheel 8. During the machining, the cooling water is guided to the first cooling joint 14, and is guided to the annular water channel 402 through the passage arranged in the fixing plate 4. When the cooling water flows to the outer circumference of the grinding wheel 8 through the water outlet passage 9, a hysteresis α offset is generated in the grinding area A of the grinding wheel 8 relative to the position of the water outlet passage 9 due to the high-speed rotation of the grinding wheel 8. An actual value of the α offset is affected by factors such as the rotation speed of the grinding wheel 8 and the diameter of the grinding wheel 8. The motor 6 and the transmission device 7 drive the moving plate 5 to rotate to regulate an orientation of the cooling water output from the water outlet passage 9, and the α offset advance amount of the grinding area A of the grinding wheel 8 relative to the position of the water outlet channel 9 can be adjusted, so that the water from the water outlet B of the grinding wheel 8 mainly concentratedly acts on the grinding area A of the grinding wheel 8 to cool the grinding area A of the grinding wheel 8. Thus, cooling efficiency and a cooling water utilization rate are improved, cooling water consumption is effectively reduced, and a treatment capacity requirement on water treatment equipment is greatly reduced. Therefore, higher machining quality, machining speed and machining efficiency can be obtained conveniently.

The above embodiment can be further improved as follows.

A C-shaped outer cover 22 is arranged at the lower end of the moving plate 5, and is arranged on the periphery of the grinding wheel 8. A bottom cover 23 is arranged at the lower end of the outer cover 22, and is fixedly connected to the outer cover 22. A cover structure formed by the bottom cover 23 and the outer cover 22 covers the grinding wheel 8. A part of a grinding surface of the grinding wheel 8 extends out of a notch of the C-shaped outer cover 22 to form a working area. An area of the grinding wheel 8 in contact with a workpiece forms a grinding area; a water outlet of the water outlet passage 9 is of an arc structure; and the arc length of the water outlet of the water outlet passage 9 is one or two times of the length of the grinding area.

When the cooling water is sucked through the annular water vapor channel 801 and the mixed flow passages 802 of the grinding wheel 8, the cooling water and the negative pressure concentratedly act on the notch of the C-shaped outer cover 22 under the action of the outer cover 22 to concentratedly supply water to and cool the grinding area A of the grinding wheel 8. Thus, consumption of the cooling water is effectively reduced. Meanwhile, an operating power of the negative pressure device 19 during generating of the negative pressure is reduced, so that equipment cost of the negative pressure device 19 is reduced.

A baffle 24 is arranged on each of the two sides of the outer cover 22 close to the grinding area of the grinding wheel 8. Both of the two baffles 24 are connected to the moving plate 5, and are connected to the outer cover 22 through adjusting nuts 25. An opening degree of the outer cover 22 is adjusted through the adjusting nuts 25. By adjusting the opening degree of the outer cover 22, the diameter change of the grinding wheel 8 due to wearing can be adapted.

### Fourth Embodiment

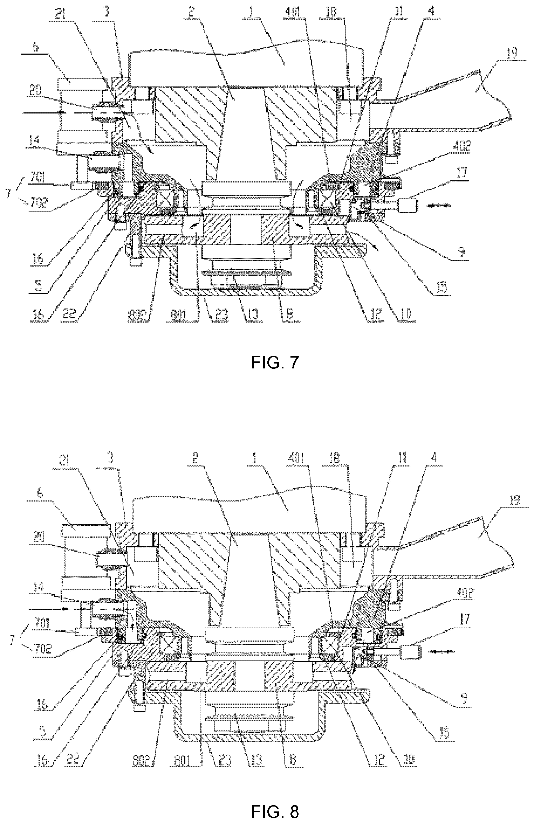

As shown in FIGs. 7, 8, 9 and 10, a water-saving cooling system of a glass machining center includes a CNC headstock 1 and a tool holder 2, wherein the tool holder 2 is located at the lower end of the CNC headstock 1, and the upper end of the tool holder 2 is fixedly connected to an output end of the CNC headstock 1.

A fixing plate 4 is arranged on the periphery of the output end of the CNC headstock 1 in a sleeving manner, and is fixedly connected to a main body of the CNC headstock 1 through a connecting member 3.

A moving plate 5 is arranged on the periphery of the tool holder 2 in a sleeving manner, and is located at the lower end of the fixing plate 4. A motor 6 is arranged on one side of the upper end of the fixing plate 4. An output shaft of the motor 6 is connected to the moving plate 5 through a transmission device 7.

A grinding wheel 8 sleeves the tool holder 2, and is located below the moving plate 5. The output end of the CNC headstock 1 drives the grinding wheel 8 to rotate through the tool holder 2.

An annular water channel 402 is formed on the fixing plate 4. A water outlet passage 9 is arranged in the moving plate 5. An upper end of the water outlet passage 9 is communicated with the annular water channel 402. The lower end of the water outlet passage 9 extends to the grinding wheel 8. Cooling water is guided to the annular water channel 402 through a passage arranged in the fixing plate 4, and is output to the grinding wheel 8 through the water outlet passage 9. The motor 6 drives the moving plate 5 to rotate through the transmission device 7 to regulate an orientation of the cooling water output from the water outlet passage 9.

A C-shaped outer cover 22 is arranged at the lower end of the moving plate 5, and is arranged on the periphery of the grinding wheel 8. A bottom cover 23 is arranged at the lower end of the outer cover 22, and is fixedly connected to the outer cover 22. A cover structure formed by the bottom cover 23 and the outer cover 22 covers the grinding wheel 8. A part of a grinding surface of the grinding wheel 8 extends out of a notch of the C-shaped outer cover 22 to form a working area. An area of the grinding wheel 8 in contact with a workpiece forms a grinding area; a water outlet of the water outlet passage 9 is of an arc structure; and the arc length of the water outlet of the water outlet passage 9 is one or two times of the length of the grinding area.

In the above embodiment, the cooling water and the negative pressure concentratedly act on the notch of the C-shaped outer cover 22 under the action of the outer cover 22 to concentratedly supply water to and cool the grinding area A of the grinding wheel 8. Thus, consumption of the cooling water is effectively reduced. Meanwhile, an operating power of the negative pressure device 19 during generating of the negative pressure is reduced, so that equipment cost of the negative pressure device 19 is reduced.

In the above embodiment, the transmission device 7 includes a driving gear 701 and a driven gear 702. The driving gear 701 is arranged below the motor 6. The output shaft of the motor 6 is connected to the driving gear 701. The driven gear 702 is fixedly mounted on an outer circumference of the moving plate 5 in a sleeving manner, and is meshed with the driving gear 701. The output shaft of the motor 6 drives the moving plate 5 to rotate through the driving gear 701 and the driven gear 702.

In the above embodiment, the fixing plate 4 is provided with an annular bearing position 401 with a downward opening, and the annular bearing position 401 sleeves a bearing 10. An annular end of the moving plate 5 close to the tool holder 2 extends into the annular bearing position 401, and is rotationally connected to the fixing plate 4 through the bearing 10, so that the rotation of the moving plate 5 relative to the fixing plate 4 is more stable.

In the above embodiment, a hole retaining ring 11 is arranged at the upper end of the bearing 10, and is arranged inside an annular bearing position 401 in a sleeving manner. An outer circumference of the hole retaining ring 11 is embedded in the moving plate 5. A bearing gland 12 is arranged in an inner ring of the moving plate 5, is arranged on the periphery of the tool holder 2 in a sleeving manner, and is located at the lower end of the bearing 10. The bearing gland 12 is fixedly connected to the fixing plate 4 through a screw.

In the above embodiment, a tool change ring 13 is arranged at each of the upper end and the lower end of the grinding wheel 8, and both of the two tool change rings 13 sleeve the tool holder 2. The tool change ring 13 at the lower end of the grinding wheel 8 is fixedly connected to the tool holder 2 through a nut.

As structures such as the moving plate 5 are arranged on the periphery of the tool holder 2 in a sleeving manner, a tool change fork is blocked from clamping a tool change channel on the tool holder 2. The tool change ring 13 is arranged below the grinding wheel 8, so that the tool change fork can smoothly clamp the tool change ring 13 arranged below the grinding wheel 8 during automatic tool change, realizing automatic change of a tool.

In the above embodiment, the fixing plate 4 is connected to a first cooling joint 14. The first cooling joint 14 is communicated with the annular water channel 402 through a passage arranged in the fixing plate 4. A lower end cover 15 is arranged at the lower end of the moving plate 5, and is connected to the moving plate 5. The upper end of the water outlet passage 9 is communicated with the annular water channel 402; and the lower end of the water outlet passage 9 extends to the grinding wheel 8. The cooling water is guided through the first cooling joint 14, and is output to the annular water channel 402 through the passage arranged in the fixing plate 4.

The cooling water is guided to the first cooling joint 14, and the upper end of the water outlet passage 9 is communicated with the annular water channel 402, so that the water outlet passage 9 can be communicated with the annular water channel 402 at any position in 360° rotation. The lower end of the water outlet passage 9 extends to the grinding wheel 8 through the lower end cover 15, so that the cooling water is output to the grinding wheel 8 along the water outlet passage 9. Thus, directional output of the cooling water is realized, cooling efficiency in a grinding process of the grinding wheel 8 is improved, a cooling water utilization rate is improved, and cooling water consumption is effectively reduced. Therefore, a higher machining speed is ensured.

In the above embodiment, sealing rings 16 corresponding to an inner ring and an outer ring of the annular water channel 402 respectively are arranged between the fixing plate 4 and the moving plate 5.

The two sealing rings 16 can seal the annular water channel 402, so that the annular water channel 402 is prevented from water leakage, and stable operation of the water-saving cooling system of the glass machining center is ensured.

In the above embodiment, an annular water vapor channel 801 with an upward opening is formed in the grinding wheel 8. A plurality of mixed flow passages 802 is arranged in the grinding wheel 8, and are radially arranged along the grinding wheel 8 to form a ring-shaped structure. One end of each of the mixed flow passages 802 extends to an annular grinding port of the grinding wheel 8, and the other end of each of the mixed flow passages 802 is communicated with the annular water vapor channel 801.

In the above embodiment, an adjusting bolt 17 corresponding to the water outlet passage 9 is arranged on the moving plate 5, is fixedly connected to the water outlet passage 9, and is in threaded cooperation with the moving plate 5. When being rotated, the adjusting bolt 17 drives the water outlet passage 9 to displace in a radial direction.

The adjusting bolt 17 drives the water outlet passage 9 to radially displace to adapt to different sizes of outer circumferences of the different grinding wheels 8.

In the above embodiment, a baffle 24 is arranged on each of the two sides of the outer cover 22 close to the grinding area of the grinding wheel 8. Both of the two baffles 24 are connected to the moving plate 5, and are connected to the outer cover 22 through adjusting nuts 25. An opening degree of the outer cover 22 is adjusted through the adjusting nuts 25. By adjusting the opening degree of the outer cover 22, the diameter change of the grinding wheel 8 due to wearing can be adapted.

In the above embodiment, the lower end of the water outlet passage 9 extends to the outer circumference of the grinding wheel 8. The connecting member 3 is connected to a negative pressure device 19. A negative pressure passage 18 is arranged in the fixing plate 4. One end of the negative pressure passage 18 is communicated with the negative pressure device 19 through the connecting member 3. The other end of the negative pressure passage 18 is communicated with the annular water vapor channel 801 formed in the grinding wheel 8 through an inner ring of the moving plate 5. The negative pressure device 19 generates negative pressure in the negative pressure passage 18 to suck waste chips and water vapor generated by the grinding wheel 8 in a grinding process through the annular water vapor channel 801 and the mixed flow passages 802. The cooling water cools the grinding area A when passing through the grinding area A.

When passing through the outer circumference of the grinding wheel 8, the cooling water or the negative pressure airflow concentratedly cools or sucks the grinding area A of the grinding wheel 8 at the notch of the C-shaped outer cover 22 under the action of the outer cover 22.

In the above embodiment, the connecting member 3 is connected to a second cooling joint 20. A cooling water passage 21 is arranged in the fixing plate 4. One end of the cooling water passage 21 is communicated with the second cooling joint 20 through the connecting member 3. The other end of the cooling water passage 21 is communicated with the annular water vapor channel 801 formed in the grinding wheel 8 through the inner ring of the moving plate 5. The cooling water is guided to the second cooling joint 20, and is input into the annular water vapor channel 801 through the cooling water passage 21. Meanwhile, the negative pressure device 19 and the first cooling joint 14 are shut off.

The cooling water is guided to the second cooling joint, and the cooling water output from the cooling water passage flows out through the annular water vapor channel and the plurality of mixed flow passages arranged in the grinding wheel, so that the cooling water is directly poured to the grinding area. The cooling water cools the grinding area A when passing through the grinding area A, and the cooling effect is better. In addition, under the same cooling effect, the amount of the required cooling water is usually less as the cooling water flows out through the annular water channel and the multiple mixed flow passages.

In the above embodiments: as shown in FIG. 7, in the internal cooling mode, the cooling water is guided to the annular water vapor channel 801 through the second cooling joint 20 and the cooling water passage 21, and flows out through the annular water vapor channel 801 and the mixed flow passages 802. The cooling water cools the grinding area A when passing through the grinding area A. At this time, the first cooling joint 14 and the negative pressure device 19 are shut off.

As shown in FIG. 8, in the external cooling mode, the cooling water is output to the outer circumference of the grinding wheel 8 through the first cooling joint 14, the annular water channel 402 and the water outlet passage 9. The cooling water cools the grinding area A when passing through the grinding area A. At this time, the second cooling joint 20 and the negative pressure device 19 are shut off.

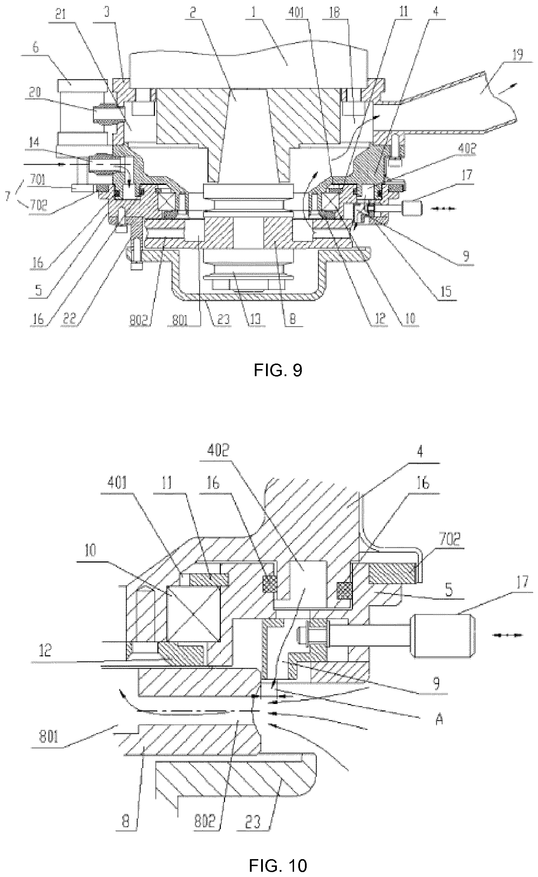

As shown in FIGs. 9 and 10, in the reverse cooling mode, the cooling water is output to the outer circumference of the grinding wheel 8 through the first cooling joint 14, the annular water channel 402 and the water outlet passage 9 to cool the grinding area A of the grinding wheel 8. The negative pressure device 19 generates negative pressure in the negative pressure passage 18 to suck waste chips and water vapor generated by the grinding wheel 8 in a grinding process through the annular water vapor channel 801 and the mixed flow passages 802. The cooling water cools the grinding area A when passing through the grinding area A. At this time, the second cooling joint 20 is shut off.

In the reverse cooling mode, the cooling water is thrown away when approaching the outer circumference of the grinding wheel 8 due to the high-speed rotation of the grinding wheel 8. By means of the action of the negative pressure device 19, suction is generated in the grinding area A of the grinding wheel 8 through the annular water vapor channel 801 and the mixed flow passages 802, so that the thrown cooling water and the waste chips generated in the grinding process are sucked into the negative pressure passage 18 through the annular water vapor channel 801 and the mixed flow passages 802.

## Claims

1. A water-saving cooling system of a glass machining center, the water-saving cooling system comprising: a CNC headstock (1) and a tool holder (2), wherein the tool holder (2) is located at a lower end of the CNC headstock (1), and an upper end of the tool holder (2) is fixedly connected to an output end of the CNC headstock (1);
a fixing plate (4) is arranged on a periphery of the output end of the CNC headstock (1) in a sleeving manner, and is fixedly connected to a main body of the CNC headstock (1) through a connecting member (3);
a moving plate (5) is arranged on a periphery of the tool holder (2) in a sleeving manner, and is located at a lower end of the fixing plate (4); a motor (6) is arranged on one side of an upper end of the fixing plate (4); an output shaft of the motor (6) is connected to the moving plate (5) through a transmission device (7);
a grinding wheel (8) sleeves the tool holder (2), and is located below the moving plate (5), and the output end of the CNC headstock (1) drives the grinding wheel (8) to rotate through the tool holder (2);
a water outlet passage (9) is arranged in the moving plate (5), and the motor (6) drives the moving plate (5) to rotate through the transmission device (7) to regulate an orientation of the cooling water output from the water outlet passage (9);
a C-shaped outer cover (22) is arranged at a lower end of the moving plate (5), and is arranged on a periphery of the grinding wheel (8), and a bottom cover (23) is arranged at a lower end of the outer cover (22), and is fixedly connected to the outer cover (22); a cover structure formed by the bottom cover (23) and the outer cover (22) covers the grinding wheel (8), a part of a grinding surface of the grinding wheel (8) extends out of a notch of the C-shaped outer cover (22) to form a working area; and an area of the grinding wheel (8) in contact with a workpiece forms a grinding area (A), **characterized in that**
an annular water channel (402) is formed on the fixing plate (4), an upper end of the water outlet passage (9) is communicated with the annular water channel (402), a lower end of the water outlet passage (9) extends to the grinding wheel (8), and cooling water is guided to the annular water channel (402) through a passage arranged in the connecting member (3), and is output to the grinding wheel (8) through the water outlet passage (9); and
a water outlet (B) of the water outlet passage (9) is of an arc structure, and the arc length of the water outlet (B) of the water outlet passage (9) is one or two times of the length of the grinding area (A).

2. The water-saving cooling system of the glass machining center of claim 1, wherein the transmission device (7) comprises a driving gear (701) and a driven gear (702), the driving gear (701) is arranged below the motor (6), and the output shaft of the motor (6) is connected to the driving gear (701); the driven gear (702) is fixedly mounted on an outer circumference of the moving plate (5) in a sleeving manner, and is meshed with the driving gear (701); and the output shaft of the motor (6) drives the moving plate (5) to rotate through the driving gear (701) and the driven gear (702).

3. The water-saving cooling system of the glass machining center of claim 2, wherein the fixing plate (4) is provided with an annular bearing position (401) with a downward opening, and the annular bearing position (401) sleeves a bearing (10); and an annular end of the moving plate (5) close to the tool holder (2) extends into the annular bearing position (401), and is rotationally connected to the fixing plate (4) through the bearing (10).

4. The water-saving cooling system of the glass machining center of claim 3, wherein a hole retaining ring (11) is arranged at an upper end of the bearing (10), and is arranged inside the annular bearing position (401) in a sleeving manner, and an outer circumference of the hole retaining ring (11) is embedded in the moving plate (5); a bearing gland (12) is arranged in an inner ring of the moving plate (5), is arranged on the periphery of the tool holder (2) in a sleeving manner, and is located at a lower end of the bearing (10); and the bearing gland (12) is fixedly connected to the fixing plate (4) through a screw.

5. The water-saving cooling system of the glass machining center of claim 4, wherein a tool change ring (13) is arranged at each of an upper end and a lower end of the grinding wheel (8), and both of the two tool change rings (13) sleeve the tool holder (2); and the tool change ring (13) at the lower end of the grinding wheel (8) is fixedly connected to the tool holder (2) through a nut.

6. The water-saving cooling system of the glass machining center of claim 5, wherein the fixing plate (4) is connected to a first cooling joint (14), and the first cooling joint (14) is communicated with the annular water channel (402) through a passage arranged in the fixing plate (4); a lower end cover (15) is arranged at the lower end of the moving plate (5), and is connected to the moving plate (5); the upper end of the water outlet passage (9) is communicated with the annular water channel (402); the lower end of the water outlet passage (9) extends to the grinding wheel (8); the cooling water is guided through the first cooling joint (14), and is output to the annular water channel (402) through the passage arranged in the fixing plate (4); and sealing rings (16) corresponding to an inner ring and an outer ring of the annular water channel (402) respectively are arranged between the fixing plate (4) and the moving plate (5).

7. The water-saving cooling system of the glass machining center of claim 6, wherein an adjusting bolt (17) corresponding to the water outlet passage (9) is arranged on the moving plate (5), is fixedly connected to the water outlet passage (9), and is in threaded cooperation with the moving plate (5); and when being rotated, the adjusting bolt (17) drives the water outlet passage (9) to displace in a radial direction of the tool holder (2).

8. The water-saving cooling system of the glass machining center of claim 7, wherein an annular water vapor channel (801) with an upward opening is formed in the grinding wheel (8), and a plurality of mixed flow passages (802) is arranged in the grinding wheel (8), and are radially arranged along the grinding wheel (8) to form a ring-shaped structure; and one end of each of the mixed flow passages (802) extends to an annular grinding port of the grinding wheel (8), and the other end of each of the mixed flow passages (802) is communicated with the annular water vapor channel (801).

9. The water-saving cooling system of the glass machining center of claim 8, wherein the lower end of the water outlet passage (9) is communicated with the annular water vapor channel (801) formed in the grinding wheel (8); and the cooling water output from the water outlet passage (9) flows out through the annular water vapor channel (801) and the plurality of mixed flow passages (802).

10. The water-saving cooling system of the glass machining center of claim 8, wherein the lower end of the water outlet passage (9) extends to an outer circumference of the grinding wheel (8).

11. The water-saving cooling system of the glass machining center of claim 10, wherein one end of the connecting member (3) is communicated with a negative pressure device (19), a negative pressure passage (18) is arranged in the fixing plate (4), one end of the negative pressure passage (18) is communicated with the negative pressure device (19) through the connecting member (3), the other end of the negative pressure passage (18) is communicated with the annular water vapor channel (801) formed in the grinding wheel (8) through an inner ring of the moving plate (5), and the negative pressure device (19) generates negative pressure in the negative pressure passage (18) to suck waste chips and water vapor generated by the grinding wheel (8) in a grinding process through the annular water vapor channel (801) and the mixed flow passages (802).

12. The water-saving cooling system of the glass machining center of claim 11, wherein the connecting member (3) is connected to a second cooling joint (20), a cooling water passage (21) is arranged in the fixing plate (4), one end of the cooling water passage (21) is communicated with the second cooling joint (20) through the connecting member (3), and the other end of the cooling water passage (21) is communicated with the annular water vapor channel (801) formed in the grinding wheel (8) through the inner ring of the moving plate (5); the cooling water is guided to the second cooling joint (20), and is input into the annular water vapor channel (801) through the cooling water passage (21); and meanwhile, the negative pressure device (19) and the first cooling joint (14) are shut off.

13. The water-saving cooling system of the glass machining center of claim 1, wherein a baffle (24) is arranged on each of the two sides of the outer cover (22) close to the grinding area (A) of the grinding wheel (8); both of the two baffles (24) are connected to the moving plate (5), and are connected to the outer cover (22) through adjusting nuts (25); and an opening degree of the outer cover (22) is adjusted by the adjusting nuts (25).

## Patentansprüche

1. Wassersparende Kühlanlage eines Glasbearbeitungszentrums, wobei die wassersparende Kühlanlage Folgendes umfasst: einen CNC-Spindelstock (1) und einen Werkzeughalter (2), wobei der Werkzeughalter (2) an einem unteren Ende des CNC-Spindelstocks (1) angeordnet ist und ein oberes Ende des Werkzeughalters (2) fest mit einem Abtriebsende des CNC-Spindelstocks (1) verbunden ist,
wobei eine Befestigungsplatte (4) auf eine umhüllende Weise an einem Umfang des Abtriebsendes des CNC-Spindelstocks (1) angeordnet ist und durch ein Verbindungselement (3) fest mit einem Hauptkörper des CNC-Spindelstocks (1) verbunden ist,
wobei eine bewegliche Platte (5) auf eine umhüllende Weise an einem Umfang des Werkzeughalters (2) angeordnet ist und sich an einem unteren Ende der Befestigungsplatte (4) befindet, wobei ein Motor (6) auf einer Seite eines oberen Endes der Befestigungsplatte (4) angeordnet ist, wobei eine Abtriebswelle des Motors (6) durch eine Übertragungsvorrichtung (7) mit der beweglichen Platte (5) verbunden ist,
wobei eine Schleifscheibe (8) den Werkzeughalter (2) umhüllt und sich unterhalb der beweglichen Platte (5) befindet und das Abtriebsende des CNC-Spindelstocks (1) durch den Werkzeughalter (2) die Schleifscheibe (8) antreibt, damit sie sich dreht,
wobei ein Wasserauslassdurchgang (9) in der beweglichen Platte (5) angeordnet ist und der Motor (6) die bewegliche Platte (5) durch die Übertragungsvorrichtung (7) antreibt, damit sie sich dreht, um eine Ausrichtung der Kühlwasserausgabe aus dem Wasserauslassdurchgang (9) zu regulieren,
wobei eine C-förmige äußere Abdeckung (22) an einem unteren Ende der beweglichen Platte (5) angeordnet ist und an einem Umfang der Schleifscheibe (8) angeordnet ist und eine untere Abdeckung (23) an einem unteren Ende der äußeren Abdeckung (22) angeordnet ist und fest mit der äußeren Abdeckung (22) verbunden ist, wobei eine Abdeckungsstruktur, die durch die untere Abdeckung (23) und die äußere Abdeckung (22) gebildet wird, die Schleifscheibe (8) abdeckt, wobei sich ein Teil einer Schleiffläche der Schleifscheibe (8) aus einer Kerbe der C-förmigen äußeren Abdeckung (22) heraus erstreckt, um einen Arbeitsbereich zu bilden, und ein Bereich der Schleifscheibe (8) in Berührung mit einem Werkstück einen Schleifbereich (A) bildet, **dadurch gekennzeichnet, dass**
ein ringförmiger Wasserkanal (402) an der Befestigungsplatte (4) geformt ist, wobei ein oberes Ende des Wasserauslassdurchgangs (9) mit dem ringförmigen Wasserkanal (402) verbunden ist, sich ein unteres Ende des Wasserauslassdurchgangs (9) bis zu der Schleifscheibe (8) erstreckt und Kühlwasser durch einen Durchgang, der in dem Verbindungselement (3) angeordnet ist, zu dem ringförmigen Wasserkanal (402) geleitet wird und durch den Wasserauslassdurchgang (9) zu der Schleifscheibe (8) ausgegeben wird, und
ein Wasserauslass (B) des Wasserauslassdurchgangs (9) eine Bogenstruktur hat und die Bogenlänge des Wasserauslasses (B) des Wasserauslassdurchgangs (9) ein- oder zweimal die Länge des Schleifbereichs (A) beträgt.

2. Wassersparende Kühlanlage des Glasbearbeitungszentrums nach Anspruch 1, wobei die Übertragungsvorrichtung (7) ein Antriebszahnrad (701) und ein Abtriebszahnrad (702) umfasst, wobei das Antriebszahnrad (701) unterhalb des Motors (6) angeordnet ist und die Abtriebswelle des Motors (6) mit dem Antriebszahnrad (701) verbunden ist, wobei das Abtriebszahnrad (702) auf eine umhüllende Weise fest an einem äußeren Umfang der beweglichen Platte (5) angebracht ist und mit dem Antriebszahnrad (701) in Eingriff gebracht ist und die Abtriebswelle des Motors (6) durch das Antriebszahnrad (701) und das Abtriebszahnrad (702) die bewegliche Platte (5) antreibt, damit sie sich dreht.

3. Wassersparende Kühlanlage des Glasbearbeitungszentrums nach Anspruch 2, wobei die Befestigungsplatte (4) mit einer ringförmigen Lagerposition (401) mit einer Öffnung nach unten versehen ist und die ringförmige Lagerposition (401) ein Lager (10) umhüllt und sich ein ringförmiges Ende der beweglichen Platte (5) nahe dem Werkzeughalter (2) in die ringförmige Lagerposition (401) erstreckt und durch das Lager (10) drehend mit der Befestigungsplatte (4) verbunden ist.

4. Wassersparende Kühlanlage des Glasbearbeitungszentrums nach Anspruch 3, wobei ein Lochrückhaltering (11) an einem oberen Ende des Lagers (10) angeordnet ist und auf eine umhüllende Weise innerhalb der ringförmigen Lagerposition (401) angeordnet ist und ein äußerer Umfang des Lochrückhalterings (11) in der beweglichen Platte (5) eingebettet ist, wobei eine Lagerstopfbüchse (12) in einem inneren Ring der beweglichen Platte (5) angeordnet ist, auf eine umhüllende Weise an dem Umfang des Werkzeughalters (2) angeordnet ist und sich an einem unteren Ende des Lagers (10) befindet und wobei die Lagerstopfbüchse (12) durch eine Schraube fest mit der Befestigungsplatte (4) verbunden ist.

5. Wassersparende Kühlanlage des Glasbearbeitungszentrums nach Anspruch 4, wobei ein Werkzeugwechselring (13) sowohl an einem oberen Ende als auch an einem unteren Ende der Schleifscheibe (8) angeordnet ist und beide der zwei Werkzeugwechselringe (13) den Werkzeughalter (2) umhüllen und der Werkzeugwechselring (13) an dem unteren Ende der Schleifscheibe (8) durch eine Mutter fest mit dem Werkzeughalter (2) verbunden ist.

6. Wassersparende Kühlanlage des Glasbearbeitungszentrums nach Anspruch 5, wobei die Befestigungsplatte (4) mit einem ersten Kühlungsanschluss (14) verbunden ist und der erste Kühlungsanschluss (14) durch einen Durchgang, der in der Befestigungsplatte (4) angeordnet ist, mit dem ringförmigen Wasserkanal (402) in Verbindung steht, wobei eine untere Endabdeckung (15) an dem unteren Ende der beweglichen Platte (5) angeordnet ist und mit der beweglichen Platte (5) verbunden ist, wobei das obere Ende des Wasserauslassdurchgangs (9) mit dem ringförmigen Wasserkanal (402) verbunden ist, wobei sich das untere Ende des Wasserauslassdurchgangs (9) bis zu der Schleifscheibe (8) erstreckt, wobei das Kühlwasser durch den ersten Kühlungsanschluss (14) geleitet wird und durch den Durchgang, der in der Befestigungsplatte (4) angeordnet sind, zu dem ringförmigen Wasserkanal (402) ausgegeben wird und Dichtungsringe (16), die einem inneren Ring beziehungsweise einem äußeren Ring des ringförmigen Wasserkanals (402) entsprechen, jeweils zwischen der Befestigungsplatte (4) und der beweglichen Platte (5) angeordnet sind.

7. Wassersparende Kühlanlage des Glasbearbeitungszentrums nach Anspruch 6, wobei ein Einstellbolzen (17), der dem Wasserauslassdurchgang (9) entspricht, an der beweglichen Platte (5) angeordnet ist, fest mit dem Wasserauslassdurchgang (9) verbunden ist und in Gewindeeingriff mit der beweglichen Platte (5) steht und wobei, wenn er gedreht wird, der Einstellbolzen (17) den Wasserauslassdurchgang (9) antreibt, damit er sich in einer Radialrichtung des Werkzeughalters (2) verschiebt.

8. Wassersparende Kühlanlage des Glasbearbeitungszentrums nach Anspruch 7, wobei ein ringförmiger Wasserdampfkanal (801) mit einer Öffnung nach oben in der Schleifscheibe (8) geformt ist und mehrere Mischströmungsdurchgänge (802) in der Schleifscheibe (8) angeordnet sind und in Radialrichtung entlang der Schleifscheibe (8) angeordnet sind, um eine ringförmige Struktur zu bilden, und wobei sich das eine Ende jedes der Mischströmungsdurchgänge (802) bis zu einem ringförmigen Schleifanschluss der Schleifscheibe (8) erstreckt und das andere Ende jedes der Mischströmungsdurchgänge (802) mit dem ringförmigen Wasserdampfkanal (801) in Verbindung steht.

9. Wassersparende Kühlanlage des Glasbearbeitungszentrums nach Anspruch 8, wobei das untere Ende des Wasserauslassdurchgangs (9) in Verbindung mit dem ringförmigen Wasserdampfkanal (801) steht, der in der Schleifscheibe (8) geformt ist, und die Kühlwasserausgabe aus dem Wasserauslassdurchgang (9) durch den ringförmigen Wasserdampfkanal (801) und die mehreren Mischströmungsdurchgänge (802) ausströmt.

10. Wassersparende Kühlanlage des Glasbearbeitungszentrums nach Anspruch 8, wobei sich das untere Ende des Wasserauslassdurchgangs (9) bis zu einem äußeren Umfang der Schleifscheibe (8) erstreckt.

11. Wassersparende Kühlanlage des Glasbearbeitungszentrums nach Anspruch 10, wobei ein Ende des Verbindungselements (3) mit einer Unterdruckvorrichtung (19) in Verbindung steht, ein Unterdruckdurchgang (18) in der Befestigungsplatte (4) angeordnet ist, das eine Ende des Unterdruckdurchgangs (18) durch das Verbindungselement (3) mit der Unterdruckvorrichtung (19) in Verbindung steht, das andere Ende des Unterdruckdurchgangs (18) durch einen inneren Ring der beweglichen Platte (5) mit dem ringförmigen Wasserdampfkanal (801), der in der Schleifscheibe (8) geformt ist, in Verbindung steht und die Unterdruckvorrichtung (19) einen Unterdruck in dem Unterdruckdurchgang (18) erzeugt, um Abfallspäne und Wasserdampf, die bei einem Schleifvorgang durch die Schleifscheibe (8) erzeugt werden, durch den ringförmigen Wasserdampfkanal (801) und die Mischströmungsdurchgänge (802) zu saugen.

12. Wassersparende Kühlanlage des Glasbearbeitungszentrums nach Anspruch 11, wobei das Verbindungselement (3) mit einem zweiten Kühlungsanschluss (20) verbunden ist, ein Kühlwasserdurchgang (21) in der Befestigungsplatte (4) angeordnet ist, das eine Ende des Kühlwasserdurchgangs (21) durch das Verbindungselement (3) mit dem zweiten Kühlungsanschluss (20) in Verbindung steht und das andere Ende des Kühlwasserdurchgangs (21) durch den inneren Ring der beweglichen Platte (5) mit dem ringförmigen Wasserdampfkanal (801), der in der Schleifscheibe (8) geformt ist, in Verbindung steht, wobei das Kühlwasser zu dem zweiten Kühlungsanschluss (20) geleitet wird und durch den Kühlwasserdurchgang (21) in den ringförmigen Wasserdampfkanal (801) eingegeben wird und währenddessen die Unterdruckvorrichtung (19) und der erste Kühlungsanschluss (14) abgesperrt sind.

13. Wassersparende Kühlanlage des Glasbearbeitungszentrums nach Anspruch 1, wobei eine Ablenkplatte (24) auf jeder der zwei Seiten der äußeren Abdeckung (22) nahe dem Schleifbereich (A) der Schleifscheibe (8) angeordnet ist, wobei beide der zwei Ablenkplatten (24) mit der beweglichen Platte (5) verbunden sind und durch Einstellmuttern (25) mit der äußeren Abdeckung (22) verbunden sind, und wobei ein Öffnungsgrad der äußeren Abdeckung (22) durch die Einstellmuttern (25) eingestellt wird.

## Revendications

1. Système de refroidissement à économie d'eau d'un poste d'usinage du verre, le système de refroidissement à économie d'eau comprenant : un chariot fixe de machine à commande numérique (1) et un porte-outil (2), dans lequel le porte-outil (2) est situé à une extrémité inférieure du chariot fixe de machine à commande numérique (1), et une extrémité supérieure du porte-outil (2) est reliée fixement à une extrémité de sortie du chariot fixe de machine à commande numérique (1) ;
une plaque de fixation (4) est agencée sur une périphérie de l'extrémité de sortie du chariot fixe de machine à commande numérique (1) de façon à manchonner, et est connectée fixement à un corps principal du chariot fixe de machine à commande numérique (1) par un membre de connexion (3) ;
une plaque mobile (5) est agencée sur une périphérie du porte-outil (2) de façon à manchonner, et est située sur une extrémité inférieure de la plaque de fixation (4) ; un moteur (6) est agencé sur un côté d'une extrémité supérieure de la plaque de fixation (4) ; un arbre de sortie du moteur (6) est relié à la plaque mobile (5) par un dispositif de transmission (7) ;
une meule (8) manchonne le porte-outil (2), et est située en-dessous de la plaque mobile (5), et l'extrémité de sortie du chariot fixe de machine à commande numérique (1) entraîne la meule (8) en rotation par le biais du porte-outil (2) ;
un passage de sortie d'eau (9) est agencé dans la plaque mobile (5), et le moteur (6) entraîne la plaque mobile (5) en rotation par le dispositif de transmission (7) pour réguler une orientation de l'eau de refroidissement sortie du passage de sortie d'eau (9);
un capot extérieur en C (22) est agencé à une extrémité inférieure de la plaque mobile (5), et est agencé sur une périphérie de la meule (8) et un capot inférieur (23) est agencé à une extrémité inférieure du capot extérieur (22), et est relié fixement au capot extérieur (22) ; une structure de capot formée par le capot inférieur (23) et le capot extérieur (22) couvre la meule (8), une partie d'une surface de meulage de la meule (8) s'étend hors d'une encoche du capot extérieur en C (22) pour former une zone de travail ; et une zone de la meule (8) en contact avec une pièce forme une zone de meulage (A), **caractérisé en ce**
**qu'**un canal d'eau annulaire (402) est formé sur la plaque de fixation (4), une extrémité supérieure du passage de sortie d'eau (9) communique avec le canal d'eau annulaire (402), une extrémité inférieure du passage de sortie d'eau (9) s'étend vers la meule (8), et de l'eau de refroidissement est guidée vers le canal d'eau annulaire (402) par un passage agencé dans le membre de connexion (3) et est sortie vers la meule (8) par le passage de sortie d'eau (9) ; et
une sortie d'eau (B) du passage de sortie d'eau (9) est de structure arquée, et la longueur d'arc de la sortie d'eau (B) du passage de sortie d'eau (9) est une à deux fois la longueur de la zone de meulage (A).

2. Système de refroidissement à économie d'eau de poste d'usinage du verre selon la revendication 1, dans lequel le dispositif de transmission (7) comprend une roue motrice (701) et une roue menée (702), la roue motrice (701) est agencée en-dessous du moteur (6), et l'arbre de sortie du moteur (6) est connecté à la roue motrice (701) ; la roue menée (702) est montée fixement sur une circonférence extérieure de la plaque mobile (5) de façon à manchonner, et est engrenée avec la roue motrice (701) ; et l'arbre de sortie du moteur (6) entraîne la plaque mobile (5) en rotation à travers la roue motrice (701) et la roue menée (702).

3. Système de refroidissement à économie d'eau de poste d'usinage du verre selon la revendication 2, dans lequel la plaque de fixation (4) est dotée d'une position de palier annulaire (401) avec une ouverture vers le bas, et la position de palier annulaire (401) manchonne un palier (10) ; et une extrémité annulaire de la plaque mobile (5) proche du porte-outil (2) s'étend jusque dans la position de palier annulaire (401) et est reliée en rotation à la plaque de fixation (4) par le palier (10).

4. Système de refroidissement à économie d'eau de poste d'usinage du verre selon la revendication 3, dans lequel une bague de retenue à orifice (11) est agencée à une extrémité supérieure du palier (10), et est agencée à l'intérieur de la position de palier annulaire (401) de façon à manchonner, et une circonférence extérieure de la bague de retenue à orifice (11) est enchâssée dans la plaque mobile (5) ; un presse-étoupe de palier (12) est agencé dans une bague intérieure de la plaque mobile (5), est agencé à la périphérie du porte-outil (2) de façon à manchonner, et est situé à une extrémité inférieure du palier (10) ; et le presse-étoupe de palier (12) est relié fixement à la plaque de fixation (4) par une vis.

5. Système de refroidissement à économie d'eau de poste d'usinage du verre selon la revendication 4, dans lequel une bague de changement d'outil (13) est agencée à chacune d'une extrémité supérieure et d'une extrémité inférieure de la meule (8), et les deux bagues de changement d'outil (13) manchonnent le porte-outil (2) ; et la bague de changement d'outil (13) à l'extrémité inférieure de la meule (8) est reliée fixement au porte-outil (2) par un écrou.

6. Système de refroidissement à économie d'eau de poste d'usinage du verre selon la revendication 5, dans lequel la plaque de fixation (4) est reliée à un premier joint de refroidissement (14), et le premier joint de refroidissement (14) communique avec le canal d'eau annulaire (402) par un passage agencé dans la plaque de fixation (4) ; un capot d'extrémité inférieure (15) est agencé à l'extrémité inférieure de la plaque mobile (5), et est relié à la plaque mobile (5) ; l'extrémité supérieure du passage de sortie d'eau (9) communique avec le canal d'eau annulaire (402) ; l'extrémité inférieure du passage de sortie d'eau (9) s'étend vers la meule (8) ; l'eau de refroidissement est guidée à travers le premier joint de refroidissement (14), et sort vers le canal d'eau annulaire (402) par le passage agencé dans la plaque de fixation (4) ; et des bagues d'étanchéité (16) correspondant à une bague intérieure et une bague extérieure du canal d'eau annulaire (402) respectivement sont agencées entre la plaque de fixation (4) et la plaque mobile (5).

7. Système de refroidissement à économie d'eau de poste d'usinage du verre selon la revendication 6, dans lequel un boulon de réglage (17) correspondant au passage de sortie d'eau (9) est agencé sur la plaque mobile (5), est relié fixement au passage de sortie d'eau (9), est en coopération filetée avec la plaque mobile (5) ; et lorsqu'il est tourné, le boulon de réglage (17) entraîne le passage de sortie d'eau (9) à se déplacer dans une direction radiale du porte-outil (2).

8. Système de refroidissement à économie d'eau de poste d'usinage du verre selon la revendication 7, dans lequel un canal de vapeur d'eau annulaire (801) avec une ouverture vers le haut est formé dans la meule (8) et une pluralité de passages de débit mélangé (802) est agencée dans la meule (8), et sont agencés radialement le long de la meule (8) pour former une structure annulaire ; et une extrémité de chacun des passages de débit mélangé (802) s'étend vers un port de meulage annulaire de la meule (8), et l'autre extrémité de chacun des passages de débit mélangé (802) communique avec le canal de vapeur d'eau annulaire (801).

9. Système de refroidissement à économie d'eau de poste d'usinage du verre selon la revendication 8, dans lequel l'extrémité inférieure du passage de sortie d'eau (9) communique avec le canal de vapeur d'eau annulaire (801) formé dans la meule (8) ; et l'eau de refroidissement sortie du passage de sortie d'eau (9) s'écoule à travers le canal de vapeur d'eau annulaire (801) et la pluralité de passages de débit mélangé (802).

10. Système de refroidissement à économie d'eau de poste d'usinage du verre selon la revendication 8, dans lequel l'extrémité inférieure du passage de sortie d'eau (9) s'étend vers une circonférence extérieure de la meule (8).

11. Système de refroidissement à économie d'eau de poste d'usinage du verre selon la revendication 10, dans lequel une extrémité du membre de connexion (3) communique avec un dispositif de pression négative (19), un passage à pression négative (18) est agencé dans la plaque de fixation (4), une extrémité du passage à pression négative (18) communique avec le dispositif de pression négative (19) par le membre de connexion (3), l'autre extrémité du passage à pression négative (18) communique avec le canal de vapeur d'eau annulaire (801) formé dans la meule (8) par une bague intérieure de la plaque mobile (5) et le dispositif de pression négative (19) génère une pression négative dans le passage à pression négative (18) pour aspirer des copeaux de déchets et de la vapeur d'eau générés par la meule (8) dans un procédé de meulage par le canal de vapeur d'eau annulaire (801) et les passages de débit mélangé (802).

12. Système de refroidissement à économie d'eau de poste d'usinage du verre selon la revendication 11, dans lequel le membre de connexion (3) est connecté à un second joint de refroidissement (20), un passage d'eau de refroidissement (21) est agencé dans la plaque de fixation (4), une extrémité du passage d'eau de refroidissement (21) communique avec le second joint de refroidissement (20) par le membre de connexion (3), et l'autre extrémité du passage d'eau de refroidissement (21) communique avec le canal de vapeur d'eau annulaire (801) formé dans la meule (8) par la bague interne de la plaque mobile (5) ; l'eau de refroidissement est guidée vers le second joint de refroidissement (20) et entre dans le canal de vapeur d'eau annulaire (801) par le passage d'eau de refroidissement (21) ; et pendant ce temps, le dispositif de pression négative (19) et le premier joint de refroidissement (14) sont fermés.

13. Système de refroidissement à économie d'eau de poste d'usinage du verre selon la revendication 1, dans lequel un déflecteur (24) est agencé sur chacun des deux côtés du capot extérieur (22) à proximité de la zone de meulage (A) de la meule (8) ; tous les deux déflecteurs (24) sont reliés à la plaque mobile (5) et sont reliés au capot extérieur (22) par des écrous de réglage (25) ; et un degré d'ouverture du capot extérieur (22) est ajusté par les écrous de réglage (25).
